# EUROPEAN PATENT APPLICATION

(11) **EP 4 693 016 A1**
(43) Date of publication of application: **11.02.2026**
(21) Application number: 24857936.9
(22) Date of filing: 07.06.2024
(51) Int. Cl.: G06F 3/12

(54) **PRINTING METHOD AND ELECTRONIC DEVICE**

(30) Priority: 29.08.2023 CN 202311102917; 30.08.2023 CN 202311128862
(71) Applicant: Huawei Technologies Co., Ltd., Shenzhen, Guangdong 518129 (CN)
(72) Inventor: GUO, Jiawei, Shenzhen, Guangdong 518129 (CN)
(74) Representative: Epping - Hermann - Fischer
(86) International application number: PCT/CN2024/098271
(87) International publication number: WO 2025/044391

(57) **Abstract**

This application provides a printing method and an electronic device, and relates to the field of printing technologies. The electronic device includes a host operating system and a virtual operating system that is deployed in a virtual container in the host operating system. The method includes: In response to a print request operation performed on a target application, the electronic device invokes a first print service to send a print task to a second print service via a virtual channel; and then sends a print instruction to a target printer through the second print service based on the print task, where the target application is an application on the virtual operating system, the first print service is a print service on the virtual operating system, and the second print service is a print service on the host operating system. The technical solutions provided in this application can reduce resources of the virtual container occupied by cross-system printing and improve user experience during cross-system printing.

## Description

This application claims priorities to Chinese Patent Application No. 202311102917.8, filed with the China National Intellectual Property Administration on August 29, 2023 and entitled "PRINTING METHOD AND ELECTRONIC DEVICE", and to Chinese Patent Application No. 202311128862.8, filed with the China National Intellectual Property Administration on August 30, 2023 and entitled "PRINTING METHOD AND ELECTRONIC DEVICE", both of which are incorporated herein by reference in their entireties.

### TECHNICAL FIELD

This application relates to the field of printing technologies, and in particular, to a printing method and an electronic device.

### BACKGROUND

In some compatibility scenarios, on an operating system of an electronic device, an application in another operating system may be run by using a virtualization technology, for example, a Linux application is run on a Harmony operating system.

Currently, most printer vendors provide printer drivers for some operating systems commonly used by users, for example, Harmony operating systems and Windows operating systems, but provide no printer driver that is based on a Linux operating system. Therefore, in the foregoing compatibility scenarios, the Linux application usually needs to use a print function of a host machine across systems.

However, a large quantity of resources of a virtual container are occupied in a current cross-system printing method, resulting in poor user experience during cross-system printing.

### SUMMARY

In view of this, this specification provides a printing method and an electronic device, to reduce resources of a virtual container occupied by cross-system printing, and improve user experience during cross-system printing.

To achieve the foregoing objectives, according to a first aspect, an embodiment of this specification provides a printing method, applied to an electronic device. The electronic device includes a host operating system and a virtual operating system that is deployed in a virtual container of the host operating system. The printing method includes:
in response to a print request operation performed on a target application, invoking a first print service to send a print task to a second print service via a virtual channel, where the target application is an application on the virtual operating system, the first print service is a print service on the virtual operating system, and the second print service is a print service on the host operating system; and
sending a print instruction to a target printer through the second print service based on the print task.

According to the printing method provided in this embodiment of this specification, in response to the print request operation performed on the target application, the electronic device directly invokes the first print service of the virtual operating system, and sends the print task to the second print service of the host operating system via the virtual channel. In this way, before sending the print task, the electronic device does not need to perform operations such as port listening, print task forwarding, and communicating with the second print service to obtain a list of printers, but performs direct communication between the first print service of the virtual operating system and the second print service of the host operating system via the virtual channel. Therefore, this simplifies a communication process between the first print service and the second print service, reduces occupation of resources of the virtual container, and allows a user to perform cross-system printing more smoothly, thereby improving user experience. In addition, the target application does not need to be tailored to the solution in this specification.

In a possible implementation of the first aspect, the print request operation includes a trigger operation for a first print interface and a first print control operation performed on the first print interface. The trigger operation for the first print interface is used to trigger display of the first print interface, and a printer in a printer option displayed in the first print interface is different from a printer connected to the host operating system.

In the foregoing implementation, an application on the virtual operating system no longer needs to communicate with a print service on the host operating system to obtain the printer list, so that a quantity of times of cross-system communication during cross-system printing can be reduced, and occupation of resources of the virtual container can be reduced, thereby improving user experience during cross-system printing.

In a possible implementation of the first aspect, sending the print instruction to the target printer through the second print service based on the print task includes:
displaying a second print interface in the host operating system based on the print task, where the second print interface is used by a user to select the target printer; and
in response to a second print control operation performed on the second print interface, sending the print instruction to the target printer through the second print service.

In the foregoing implementation, the user can select a printer autonomously. This can further improve user experience during cross-system printing without excessively occupying resources of the virtual container.

In a possible implementation of the first aspect, the second print interface includes a preview window, and the preview window is used to display a to-be-printed target file.

In the foregoing implementation, the user may view the to-be-printed target file in the preview window of the second print interface, and check a print parameter set for the to-be-printed target file on the target application.

In a possible implementation of the first aspect, the second print control operation is an operation of clicking a print button in the second print interface.

In the foregoing implementation, when there is no special requirement for the printer, the user may directly click the print button in the second print interface to print the target file.

In a possible implementation of the first aspect, the second print control operation includes an operation of selecting the target printer in the second print interface.

In the foregoing implementation, the user can select a required printer autonomously.

In a possible implementation of the first aspect, the second print control operation includes an operation of setting a print parameter in the second print interface.

In the foregoing implementation, when the user wants to modify the print parameter, the user may directly reset the print parameter to be modified on the second print interface, without deleting a current print task and creating another print task.

In a possible implementation of the first aspect, the print task includes print file information and the print parameter, and the print parameter does not include a printer identifier.

In the foregoing implementation, to-be-transmitted print parameters can be reduced, an amount of data transmitted across systems can be reduced, and communication resources can be reduced.

In a possible implementation of the first aspect, the print file information includes the to-be-printed target file.

In the foregoing implementation, the to-be-printed target file can be directly sent to the host operating system, thereby simplifying a communication process between the virtual operating system and the host operating system, and reducing occupation of resources of the virtual container. In a possible implementation of the first aspect, the print file information includes a storage path of a to-be-printed target file.

In the foregoing implementation, only the storage path of the to-be-printed target file is transmitted, and the to-be-printed target file does not need to be transmitted, so that an amount of data to be transmitted is much smaller. In this way, a size of data to be transmitted between the first print service and the second print service via the virtual channel can be reduced, to reduce communication resources, further improve smoothness during cross-system printing, and improve user experience.

In a possible implementation of the first aspect, sending the print instruction to the target printer through the second print service based on the print task includes:
mounting the storage path of the to-be-printed target file to a specified directory on the host operating system;
reading the to-be-printed target file from the specified directory; and
sending the print instruction to the target printer through the second print service based on the to-be-printed target file and the print parameter.

In the foregoing implementation, the to-be-printed target file may be directly read on the host operating system without being transmitted via the virtual channel, thereby simplifying a process of reading the to-be-printed target file in the virtual operating system and improving smoothness during cross-system printing.

In a possible implementation of the first aspect, the virtual operating system includes at least one of a Linux operating system, a Unix operating system, and a MacOS operating system.

In the foregoing implementation, this solution can support a cross-system compatibility scenario in which the virtual operating system is the Linux operating system, the Unix operating system, or the MacOS operating system, thereby expanding an application scope of this solution.

In a possible implementation of the first aspect, the virtual operating system is the Linux operating system, and the first print service is a printing system service cupsd.

In the foregoing implementation, because the cupsd can support print requests of most applications on the Linux operating system, this solution can support more Linux applications, thereby expanding an application scope of this solution.

In a possible implementation of the first aspect, the host operating system includes at least one of a Harmony operating system, a Windows operating system, and an Android operating system.

In the foregoing implementation, this solution can support a cross-system compatibility scenario in which the host operating system is the Harmony operating system, the Windows operating system, or the Android operating system, thereby expanding an application scope of this solution. In a possible implementation of the first aspect, the host operating system is the Harmony operating system, and the second print service is Huawei Print.

In the foregoing implementation, Huawei Print can support a wide range of print parameter options. Therefore, when there are few print parameter options in an application on the virtual operating system, the user can set richer print parameter through Huawei Print, thereby improving user experience.

In a possible implementation of the first aspect, the virtual channel is an RDP communication channel.

In the foregoing implementation, because the RDP communication channel can support cross-system communication between most operating systems, this solution can support more cross-system compatibility scenarios, thereby expanding an application scenario of this solution.

In a possible implementation of the first aspect, the RDP communication channel includes a server and a client, the server is installed on the virtual operating system, and the client is installed on the host operating system.

In a possible implementation of the first aspect, invoking the first print service to send the print task to the second print service via the virtual channel includes:
invoking a target backend in the cupsd to send the print task to the server of the RDP communication channel;
invoking the server of the RDP communication channel to send the print task to the client of the RDP communication channel; and
invoking the client of the RDP communication channel to send the print task to the second print service.

According to a second aspect, an embodiment of this specification provides a printing apparatus, applied to an electronic device. The electronic device includes a host operating system and a virtual operating system that is deployed in a virtual container of the host operating system. The printing apparatus includes:
a first sending module, configured to: in response to a print request operation performed on a target application, invoke a first print service to send a print task to a second print service via a virtual channel, where the target application is an application on the virtual operating system, the first print service is a print service on the virtual operating system, and the second print service is a print service on the host operating system; and
a second sending module, configured to send a print instruction to a target printer through the second print service based on the print task.

In an optional implementation, the print request operation includes a trigger operation for a first print interface and a first print control operation performed on the first print interface. The trigger operation for the first print interface is used to trigger display of the first print interface, and a printer in a printer option displayed in the first print interface is different from a printer connected to the host operating system.

In an optional implementation, the second sending module is specifically configured to:
display a second print interface in the host operating system based on the print task, where the second print interface is used by a user to select the target printer; and in response to a second print control operation performed on the second print interface, send the print instruction to the target printer through the second print service.

In an optional implementation, the second print interface includes a preview window, and the preview window is used to display a to-be-printed target file.

In an optional implementation, the second print control operation is an operation of clicking a print button in the second print interface.

In an optional implementation, the second print control operation includes an operation of selecting the target printer in the second print interface.

In an optional implementation, the second print control operation includes an operation of setting a print parameter in the second print interface.

In an optional implementation, the print task includes print file information and the print parameter, and the print parameter does not include a printer identifier.

In an optional implementation, the print file information includes the to-be-printed target file.

In an optional implementation, the print file information includes a storage path of the to-be-printed target file.

In an optional implementation, the first sending module is specifically configured to:
mount the storage path of the to-be-printed target file to a specified directory on the host operating system;
read the to-be-printed target file from the specified directory; and
send the print instruction to the target printer through the second print service based on the to-be-printed target file and the print parameter.

In an optional implementation, the virtual operating system includes at least one of a Linux operating system, a Unix operating system, and a MacOS operating system.

In an optional implementation, the virtual operating system is the Linux operating system, and the first print service is a printing system service cupsd.

In an optional implementation, the host operating system includes at least one of a Harmony operating system, a Windows operating system, and an Android operating system.

In an optional implementation, the host operating system is the Harmony operating system, and the second print service is Huawei Print.

In an optional implementation, the virtual channel is an RDP communication channel.

In an optional implementation, the RDP communication channel includes a server and a client, the server is installed on the virtual operating system, and the client is installed on the host operating system.

In an optional implementation, the first print service is the cupsd, and the first sending module is specifically configured to:
invoke a target backend in the cupsd to send the print task to the server of the RDP communication channel;
invoke the server of the RDP communication channel to send the print task to the client of the RDP communication channel; and
invoke the client of the RDP communication channel to send the print task to the second print service.

According to a third aspect, an embodiment of this specification provides an electronic device, including a memory and a processor. The memory is configured to store a computer program. The processor is configured to perform the method according to any one of the first aspect or the implementations of the first aspect when invoking the computer program.

According to a fourth aspect, an embodiment of this specification provides a computer-readable storage medium, storing a computer program. When the computer program is executed by a processor, the method according to any one of the first aspect or the implementations of the first aspect is implemented.

According to a fifth aspect, an embodiment of this specification provides a computer program product. When the computer program product runs on an electronic device, the electronic device is enabled to perform the method according to any one of the first aspect or the implementations of the first aspect.

According to a sixth aspect, an embodiment of this specification provides a chip system, including a processor. The processor is coupled to a memory, and the processor executes a computer program stored in the memory, to implement the method according to any one of the first aspect or the implementations of the first aspect. The chip system may be a single chip or a chip module including a plurality of chips.

It may be understood that, for beneficial effects of the second aspect to the sixth aspect, reference may be made to related descriptions in the first aspect. Details are not described herein again.

### BRIEF DESCRIPTION OF DRAWINGS

FIG. 1 is a schematic flowchart of a printing method according to an embodiment of this specification;
FIG. 2 is a diagram of a first print interface according to an embodiment of this specification;
FIG. 3 is a diagram of a printing procedure according to an embodiment of this specification;
FIG. 4 is a diagram of a printing procedure according to another embodiment of this specification;
FIG. 5 is a diagram of a second print interface according to an embodiment of this specification;
FIG. 6 is a diagram of a second print interface according to another embodiment of this specification;
FIG. 7 is a diagram of a second print interface according to another embodiment of this specification;
FIG. 8 is a diagram of a print task list according to an embodiment of this specification;
FIG. 9 is a diagram of a software architecture of an electronic device according to an embodiment of this specification;
FIG. 10 is a diagram of a structure of a printing apparatus according to an embodiment of this specification; and
FIG. 11 is a diagram of a structure of an electronic device according to an embodiment of this specification.

### DESCRIPTION OF EMBODIMENTS

The following describes embodiments of this specification with reference to the accompanying drawings in embodiments of this specification. Terms used in implementations of embodiments of this specification are merely used to explain specific embodiments of this specification, but are not intended to limit this specification. The following several specific embodiments may be combined with each other, and a same or similar concept or process may not be described repeatedly in some embodiments.

A compatibility scenario usually refers to a scenario in which, on an operating system of an electronic device, an application on another operating system is run, for example, an application on a Linux operating system is run on a Harmony operating system and a Windows operating system by using a virtualization technology.

In these compatibility scenarios, basic modules such as a display module, a keyboard input module, and a mouse input module may be adapted, so that a user can operate, in a same way as operating an application on a host operating system, applications on other operating systems, thereby implementing ecological compatibility of the operating system.

In some cases, applications of these other operating systems need to be connected to a printer to perform a printing operation. However, most printer vendors provide printer drivers for some operating systems commonly used by the user, for example, Harmony operating systems and Windows operating systems, and rarely provide a printer driver that is based on the Linux operating system. Therefore, in this case, a Linux application usually needs to use a print function of a host machine (that is, the electronic device) across systems.

When using the print function of the electronic device across systems, the Linux application may first perform cross-system communication with a print service of the host operating system to obtain a list of printers for the user to select, and then send a print file to a printing system service (cupsd) in a virtual container (that is, the Linux operating system).

The cupsd is a print management program developed based on a Common Unix operating system. The cupsd may be used on the Linux operating system.

The cupsd may be configured to receive and manage a print file sent by each Linux application. The cupsd may put the received print file into a queue, and send the print file to a corresponding printer.

Specifically, the cupsd may create a print task based on the received print file, and forward the print task to a virtual print agent service through a port to which a virtual printer listens. Then, the virtual print agent service performs cross-system communication via a virtual channel to send the print file to the print service of the host operating system. Finally, the print service of the host operating system selects, based on the print file, a specified printer for printing. However, a large quantity of resources of the virtual container are occupied in the cross-system printing method, resulting in poor user experience during cross-system printing.

Therefore, this specification provides a printing method, to reduce resources of the virtual container occupied by cross-system printing, and improve user experience during cross-system printing.

The printing method provided in this embodiment of this specification may be applied to an electronic device such as a mobile phone, a smart screen, a tablet, or a notebook computer. The electronic device may include a host operating system and a virtual operating system that is deployed in a virtual container of the host operating system. The host operating system may be a Windows operating system, a Harmony operating system, an Android operating system, or the like. The virtual operating system in the virtual container may be a Linux operating system, a Unix operating system, a MacOS operating system, or the like. For ease of description, in this embodiment of this specification, an example in which the electronic device is a tablet, the host operating system is a Harmony operating system, and the virtual operating system is a Linux operating system is used for description.

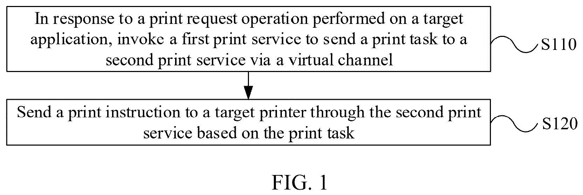

FIG. 1 is a schematic flowchart of a printing method according to an embodiment of this specification. As shown in FIG. 1, the printing method provided in this embodiment may include the following steps.

S110: In response to a print request operation performed on a target application, invoke a first print service to send a print task to a second print service via a virtual channel.

The target application may be any application with a print function on a Linux operating system, for example, Calligra Office or LibreOffice.

When a user wants to print a file by using the target application, the user may input the print request operation. The print request operation may include one or more sub-operations. For example, the target application may provide a quick print option. After the user clicks the option (that is, the print request operation), the electronic device may be triggered to perform cross-system printing. It may be understood that the user may input an operation by using an external device such as a keyboard or a mouse, or may input an operation in a touch manner. The operation input by the user on the electronic device is not limited to a click operation, and may alternatively be a voice control operation, a gesture operation, or the like. For ease of description, the click operation is used as an example for description in this embodiment of this specification.

To better meet a user requirement, the target application may also provide a print interface (referred to as a first print interface below) for the user to set a print parameter. Correspondingly, the print request operation may include an operation (referred to as a trigger operation for the first print interface herein) used to trigger the electronic device to display the first print interface and a first print control operation performed on the first print interface.

The trigger operation for the first print interface may be an operation of clicking a print option on the target application.

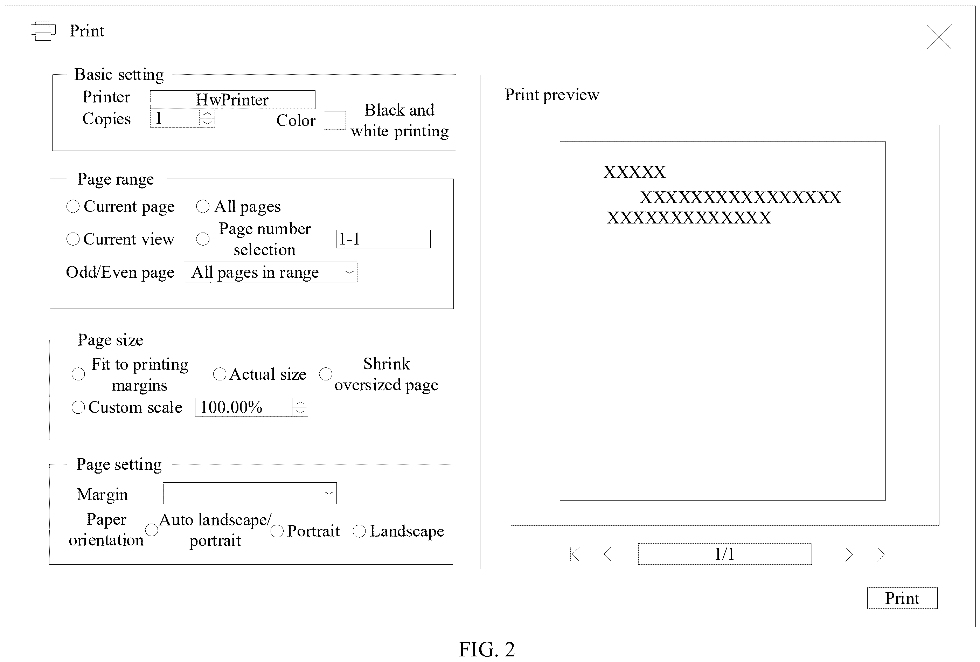

The first print interface may be shown in FIG. 2, and includes print setting options such as a basic setting option, a page range option, a page size option, and a page setting option, a print preview window, and a print button.

It may be understood that a user interface shown in this embodiment of this application is merely an example, and is not intended to limit this application. In some embodiments, the user interface displayed by the electronic device may include more or fewer interface elements than those shown in the figure, to implement more or fewer functions. Positions of the interface elements may be adjusted as required. The functions may be implemented by using other interface elements, or may be implemented in another user interface. This is not particularly limited in this embodiment.

The basic setting option may include a printer option, a copies option, a print color option, and the like. The printer option is used to display an available printer. To reduce a quantity of times of cross-system communication and reduce occupation of resources of the virtual container, the target application does not perform cross-system communication with the second print service of the host operating system to obtain a list of printers connected to the second print service. Therefore, the printer option displayed in the basic setting option is not related to the printer connected to the host operating system. The printer displayed in the basic setting option may be a printer with a fixed name, for example, HwPrinter. The user can select a number of to-be-printed copies through the copies option, and select black and white printing or color printing through the print color option. The page range option may include a current page option, an all pages option, a current view option, a page number option, an odd/even page option, and the like. The user can select a range of a to-be-printed page through the page range option. For example, the user may select to print a current page, all pages, a current view, or customize a page number that needs to be printed. In addition, the user can further select to print an odd page or an even page in page numbers.

The page size option may include a fit to printing margins option, an actual size option, a shrink oversized page option, a custom scale option, and the like. The user can select the fit to printing margins option to automatically adjust a print margin. The user can also select the actual size option to print a file based on an actual size of the print file. The user can also select the shrink oversized page option to scale down an oversized page before printing. The user can further select the custom scale option to set a page scale as required.

The page setting option can include a margin option and a paper orientation option. The user can select a proper margin through the margin option and set whether paper is printed horizontally or vertically through the paper orientation option.

The print preview window may display a to-be-printed target file. The user can visually check whether a print format of the to-be-printed target file meets an expectation in the print preview window.

The first print control operation may be an operation that the user directly clicks the print button in the first print interface, or may be an operation that the user first selects a print option in the first print interface and then clicks the print button.

In response to the print request operation, the electronic device may invoke the first print service on the virtual operating system to send the print task to the second print service via the virtual channel.

When the virtual operating system is a Linux operating system, the first print service may be cupsd. When the host operating system is a Harmony operating system, the second print service may be Huawei Print. The virtual channel may be a virtual channel for interaction based on a remote desktop protocol (Remote Desktop Protocol, RDP), a remote framebuffer (Remote FrameBuffer, RFB), an independent computing architecture (Independent Computing Architecture, ICA), a secure shell (Secure Shell, SSH), or the like. In this embodiment of this specification, an example in which the first print service is the cupsd, the second print service is the Huawei Print, and the virtual channel is an RDP communication channel is used for description.

Because the RDP communication channel can support cross-system communication between most operating systems, this solution can support more cross-system compatibility scenarios, thereby expanding an application scope of this solution. The RDP communication channel may include a server and a client. The server may be installed on the virtual operating system, and the client may be installed on the host operating system.

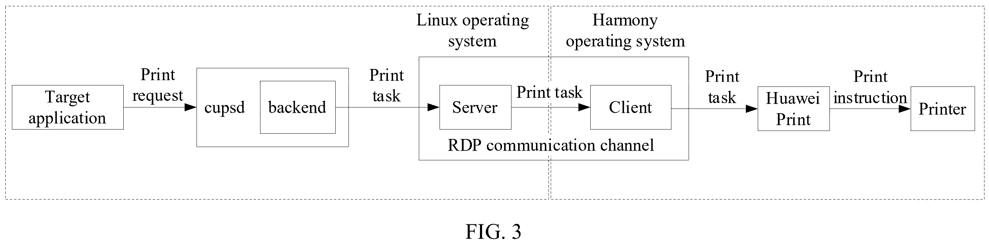

A specific printing process may be shown in FIG. 3. In response to the print request sent by the target application on the Linux operating system, the electronic device may invoke a target backend (backend) in the cupsd to send a print task to the server of the RDP communication channel. After receiving the print task, the server of the RDP communication channel may send the print task to the client of the RDP communication channel in the Harmony operating system. After receiving the print task, the client of the RDP communication channel may forward the print task to the Huawei Print (that is, the second print service).

The target backend directly sends the print task to the second print service of the host operating system via the RDP communication channel, and before sending the print task, does not perform operations such as port listening, print task forwarding, and communicating with the second print service to obtain a list of printers. Therefore, this simplifies a communication process between the first print service and the second print service, reduces occupation of resources of the virtual container, and allows the user to perform cross-system printing more smoothly, thereby improving user experience. In addition, the target application does not need to be tailored to the solution in this specification.

The print request may include a to-be-printed target file. After receiving the print request, the cupsd may first store the to-be-printed target file in a specified location on the Linux operating system, and then generate the print task according to the print request.

The print task may include print file information and a print parameter. The print file information may be the to-be-printed target file of the user. In this case, the to-be-printed target file may be directly sent to the host operating system, thereby simplifying a communication process between the virtual operating system and the host operating system, and reducing occupation of resources of the virtual container. A format of the to-be-printed target file may be a PDF, a picture, or the like. The print parameter may be generated based on a print option selected by the user on the first print interface. For example, if the user selects to print 3 copies with black and white printing from the print options on the first print interface, the print parameter may include copies, a print color, and the like.

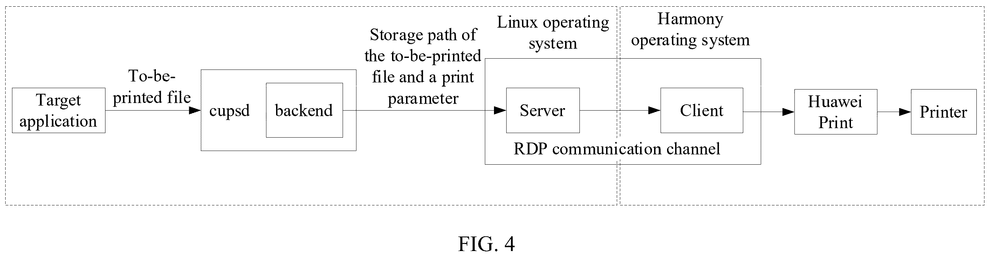

In some embodiments, the print file information may alternatively be a storage path of a to-be-printed target file. As shown in FIG. 4, a cupsd may send, through a backend, the storage path of the to-be-printed target file and a print parameter to the server of the RDP communication channel. Compared to transmitting a print file via the RDP communication channel, transmitting the storage path of the to-be-printed target file corresponds to much smaller transmission data. In this way, a size of data to be transmitted between the first print service and the second print service via the RDP communication channel can be reduced, to reduce communication resources, further improve smoothness during cross-system printing, and improve user experience.

Because the print parameter corresponds to a selection of the user from the print options in the first print interface, and the printer option displayed in the first print interface is not related to the printer connected to the host operating system, the print parameter may not include a printer identifier. The printer identifier may be a printer ID, a name, an SN number, or the like.

S 120: Send a print instruction to a target printer through the second print service based on the print task.

When the print file information in the print task is the to-be-printed target file, the electronic device may directly select, based on the print task, an idle printer connected to the second print service at random, and send the print instruction to the idle printer.

When the print file information in the print task is the storage path of the to-be-printed target file, the electronic device may mount the storage path of the to-be-printed target file in the virtual operating system to a specified directory on the host operating system. In this way, the second print service can directly read the to-be-printed target file in the specified directory on the host operating system, thereby simplifying a process of reading the to-be-printed target file in the virtual operating system and improving smoothness during cross-system printing.

After the to-be-printed target file is read, an idle printer connected to the second print service may be randomly selected, and the print instruction is sent to the idle printer based on the target file and the print parameter in the print task.

In some embodiments, the electronic device may alternatively first display a second print interface in the host operating system based on the print task, and then send the print instruction to the target printer through the second print service in response to a second print control operation performed on the second print interface.

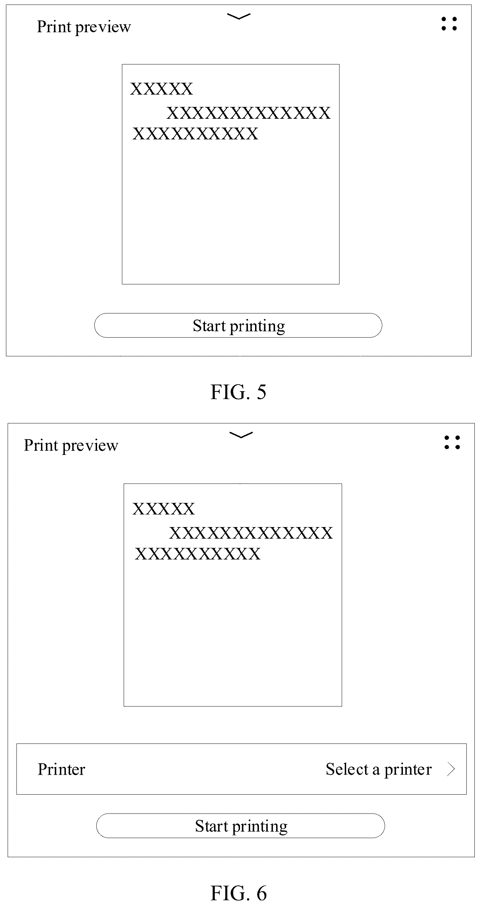

The second print interface may be shown in FIG. 5, and includes a preview window and a print button. A to-be-printed target file may be displayed in the preview window. The user may visually view, through the preview window, whether a print format of the to-be-printed target file meets an expectation. A corresponding second print control operation may be an operation of clicking the print button by the user in the second print interface.

The second print interface may alternatively be shown in FIG. 6, and includes a preview window, a printer option, and a print button. In this case, the user may select a printer from the printer option in the second print interface according to an actual requirement, and then click the print button to perform printing. This can further improve user experience during cross-system printing without excessively occupying resources of the virtual container.

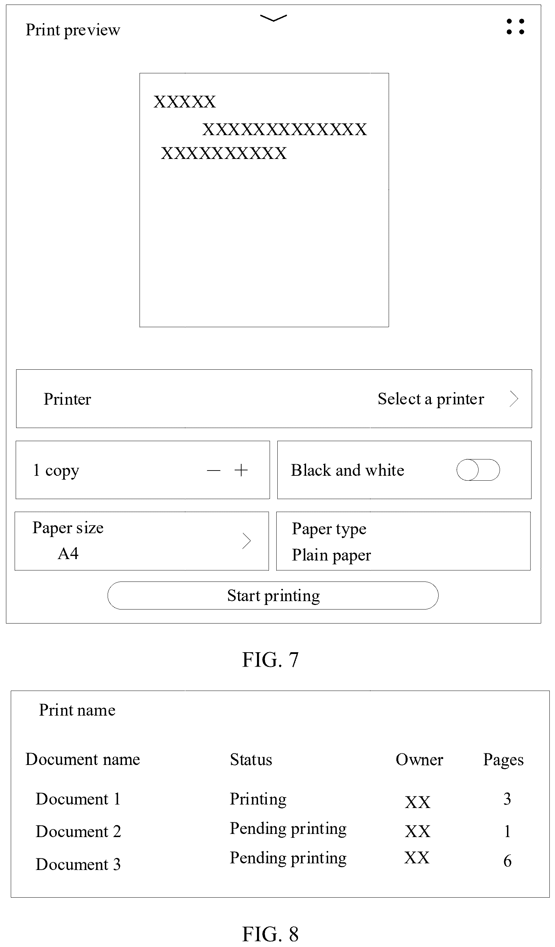

The second print interface may alternatively be shown in FIG. 7, and includes a preview window, a printer option, a print setting option, and a print button. The print setting option may include a plurality of options, for example, a copies option, a print color option, a paper size option, and a paper type option. In this way, when the user wants to modify a print parameter, the user may directly reset a print parameter to be modified in a print setting option corresponding to the print parameter on the second print interface, without deleting a current print task and creating another print task.

The print setting option in the second print interface may be the same as the print setting option in the first print interface, or the second print interface may include more or fewer print setting options than those on the first print page.

A specific parameter of each print setting option in the second print interface may be generated based on a print parameter in the print task received by the second print service. If a print option has no corresponding data in the print parameter, a specific parameter of the print option may be a default value.

In some embodiments, the second print service may further display the received print task in a print task list. The first print service directly sends the print task to the second print service via the RDP communication channel, without a need for other communication with the second print service. Therefore, the second print service may directly send the plurality of print tasks to the second print service of the host operating system when receiving a plurality of print tasks, without a need to first put the plurality of print tasks into a print queue and then to send a next print task to the second print service until a print task ends. In this way, the user can view all created print tasks in the print task list corresponding to the second print service, instead of viewing only a current print task in the print task list corresponding to the second print service, so that user experience can be improved. In addition, the print task does not need to wait in a queue of the virtual container, which further reduces resource consumption of the virtual container.

As shown in FIG. 8, three print tasks are displayed in a print task list, and are respectively corresponding to a document 1, a document 2, and a document 3. A print task corresponding to the document 1 is in a printing state, and print tasks corresponding to the document 2 and the document 3 are in a pending printing state.

It should be noted that the foregoing embodiments are examples, but are not intended to limit this specification. A person skilled in the art may select any combination from the foregoing embodiments as required, and any combination that does not depart from the essence of the solutions of this specification shall fall within the protection scope of this specification.

According to the printing method provided in this embodiment of this specification, in response to the print request operation performed on the target application, the electronic device directly invokes the first print service of the virtual operating system, and sends the print task to the second print service of the host operating system via the virtual channel. In this way, before sending the print task, the electronic device does not need to perform operations such as port listening, print task forwarding, and communicating with the second print service to obtain the list of printers, but performs direct communication between the first print service of the virtual operating system and the second print service of the host operating system via the virtual channel. Therefore, this simplifies a communication process between the first print service and the second print service, reduces occupation of resource of the virtual container, and allows the user to perform cross-system printing more smoothly, thereby improving user experience. In addition, the target application does not need to be tailored to the solution in this specification.

Based on a same concept, an embodiment of this specification further provides an electronic device. A software system of the electronic device may use a layered architecture, an event-driven architecture, a microkernel architecture, a microservice architecture, or a cloud architecture. In this embodiment of this specification, a Harmony system with a layered architecture is used as an example to illustrate the software structure of the electronic device.

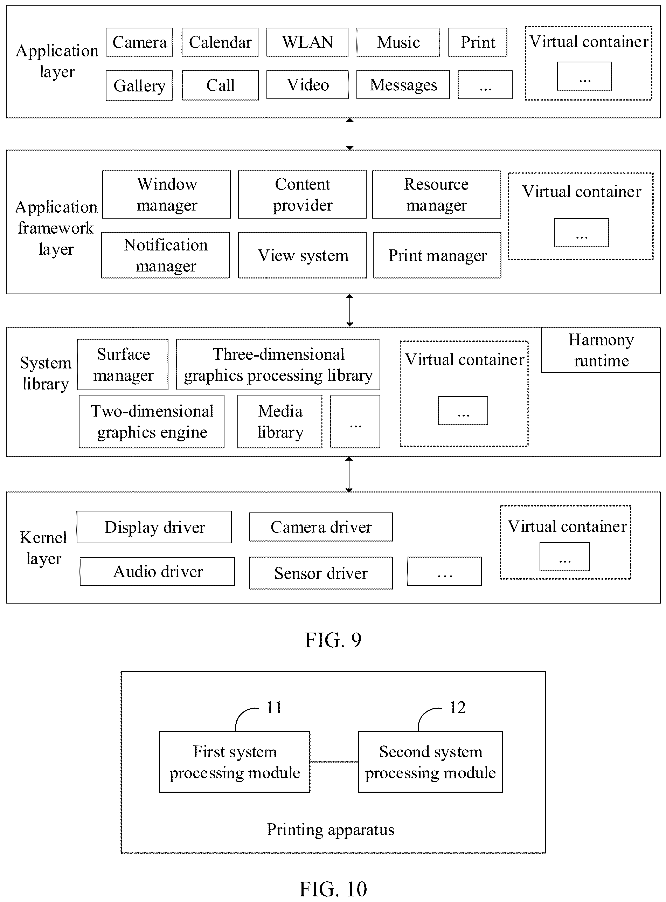

FIG. 9 is a diagram of a software architecture of an electronic device according to an embodiment of this specification. As shown in FIG. 9, a software system of a host operating system of the electronic device may be divided into several layers. In some embodiments, a Harmony system may be divided into an application layer, an application framework layer, Harmony runtime (Harmony runtime), a system library, and a kernel layer from top to bottom. The application layer may include applications such as Camera, Gallery, Calendar, Call, WLAN, Music, Video, Messages, and Print on the host operating system.

The application framework layer provides an application programming interface (application programming interface, API) and a programming framework for an application at the application layer. The application framework layer includes some predefined functions.

As shown in FIG. 9, the application framework layer in the host operating system may include a window manager, a content provider, a view system, a phone manager, a resource manager, a notification manager, a print manager, and the like.

The window manager is configured to manage a window program. The window manager may obtain a size of a display, determine whether there is a status bar, perform screen locking, take a screenshot, and the like.

The content provider is configured to: store and obtain data, and allow the data to be accessed by an application.

The view system includes visual controls such as a control for displaying a text and a control for displaying an image. The view system may be configured to construct an application. A display interface may include one or more views.

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, an alert tone is made, the electronic device vibrates, or an indicator blinks.

The print manager is used to install and configure a printer, connect to a network printer, check a status of a print task, and control file printing.

The Harmony runtime includes a kernel library and a virtual machine. The Harmony runtime is responsible for scheduling and managing the Harmony system.

The kernel library includes two parts: a function that needs to be called in Java language and a kernel library of Harmony.

The application layer and the application framework layer run on the virtual machine. The virtual machine executes Java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer may include a display driver, a camera driver, an audio driver, and a sensor driver.

A software architecture of a virtual operating system in a virtual container is similar to the software system of the host operating system, and details are not described herein again.

Based on a same concept, as implementation of the foregoing method, an embodiment of this specification provides a printing apparatus. The apparatus is used in an electronic device, and the electronic device includes a host operating system and a virtual operating system that is deployed in a virtual container of the host operating system. The apparatus embodiment corresponds to the foregoing method embodiment. For ease of reading, details in the foregoing method embodiment are not described in this apparatus embodiment, but it should be clear that, the apparatus in this embodiment can correspondingly implement all content in the foregoing method embodiment.

FIG. 10 is a diagram of a structure of a printing apparatus according to an embodiment of this specification. As shown in FIG. 10, the printing apparatus provided in this embodiment includes the following modules.

A first system processing module 11 is configured to: in response to a print request operation performed on a target application, invoke a first print service to send a print task to a second print service via a virtual channel. The target application is an application on a virtual operating system, the first print service is a print service on the virtual operating system, and the second print service is a print service on a host operating system.

A second system processing module 12 is configured to send a print instruction to a target printer through the second print service based on the print task.

In an optional implementation, the print request operation includes a trigger operation for a first print interface and a first print control operation performed on the first print interface. The trigger operation for the first print interface is used to trigger display of the first print interface, and a printer in a printer option displayed in the first print interface is different from a printer connected to the host operating system.

In an optional implementation, the second system processing module 12 is specifically configured to:
display a second print interface in the host operating system based on the print task, where the second print interface is used by a user to select the target printer; and in response to a second print control operation performed on the second print interface, send the print instruction to the target printer through the second print service.

In an optional implementation, the second print interface includes a preview window, and the preview window is used to display a to-be-printed target file.

In an optional implementation, the second print control operation is an operation of clicking a print button in the second print interface.

In an optional implementation, the second print control operation includes an operation of selecting the target printer in the second print interface.

In an optional implementation, the second print control operation includes an operation of setting a print parameter in the second print interface.

In an optional implementation, the print task includes print file information and the print parameter, and the print parameter does not include a printer identifier.

In an optional implementation, the print file information includes the to-be-printed target file.

In an optional implementation, the print file information includes a storage path of the to-be-printed target file.

In an optional implementation, a first sending module is specifically configured to:
mount the storage path of the to-be-printed target file to a specified directory on the host operating system;
read the to-be-printed target file from the specified directory; and
send the print instruction to the target printer through the second print service based on the to-be-printed target file and the print parameter.

In an optional implementation, the virtual operating system includes at least one of a Linux operating system, a Unix operating system, and a MacOS operating system.

In an optional implementation, the virtual operating system is the Linux operating system, and the first print service is a printing system service cupsd.

In an optional implementation, the host operating system includes at least one of a Harmony operating system, a Windows operating system, and an Android operating system.

In an optional implementation, the host operating system is the Harmony operating system, and the second print service is Huawei Print.

In an optional implementation, the virtual channel is an RDP communication channel.

In an optional implementation, the RDP communication channel includes a server and a client, the server is installed on the virtual operating system, and the client is installed on the host operating system.

In an optional implementation, the first print service is the cupsd, and the first sending module is specifically configured to:
invoke a target backend in the cupsd to send the print task to the server of the RDP communication channel;
invoke the server of the RDP communication channel to send the print task to the client of the RDP communication channel; and
invoke the client of the RDP communication channel to send the print task to the second print service.

The apparatus provided in this embodiment can perform the foregoing method embodiments, and implementation principles and technical effects of the apparatus are similar to those of the foregoing method embodiments. Details are not described herein.

A person skilled in the art may clearly understand that, for the purpose of convenient and brief description, division into the foregoing functional units and modules is merely used as an example for illustration. During actual application, the foregoing functions may be allocated to different functional units and modules for implementation as required. In other words, an inner structure of the apparatus is divided into different functional units or modules, to implement all or some of the functions described above. The functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this specification. For a specific working process of the units or modules in the foregoing system, refer to a corresponding process in the method embodiments. Details are not described herein again.

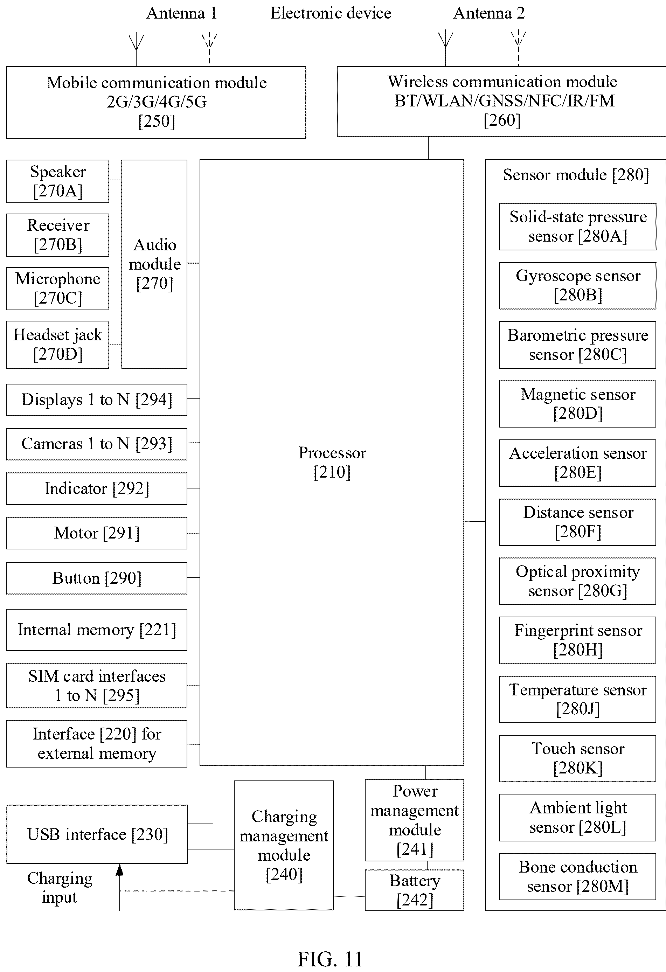

Based on a same concept, an embodiment of this specification further provides an electronic device. FIG. 11 is a diagram of a structure of an electronic device according to an embodiment of this specification.

The electronic device may include a processor 210, an interface 220 for external memory, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a solid-state pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application does not constitute a specific limitation on the electronic device. In some other embodiments of this application, the electronic device may include more or fewer components than those shown in the figure, some components may be combined, some components may be split, or a different component deployment may be used. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a time sequence signal, to complete control of instruction fetch and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The 12C interface is a two-way synchronous serial bus, including a serial data line (serial data line, SDA) and a serial clock line (serial clock line, SCL). The I2S interface may be configured to perform audio communication. The PCM interface may be configured to: perform audio communication, and sample, quantize, and encode an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 210 and peripheral devices such as the display 294 and the camera 293. The MIPI interface includes a camera serial interface (camera serial interface, CSI), a display serial interface (display serial interface, DSI), and the like. The GPIO interface may be configured by software. The GPIO interface may be configured as a control signal or a data signal. The USB interface 230 is an interface that conforms to a USB standard specification, and may be specifically a mini USB interface, a micro USB interface, a USB Type-C interface, or the like. The USB interface 230 may be configured to connect to a charger to charge the electronic device, or may be used for data transmission between the electronic device and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners. The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the electronic device. When charging the battery 242, the charging management module 240 may further supply power to the electronic device by using the power management module 241.

The power management module 241 is configured to connect to the battery 242, the charging management module 240, and the processor 210. The power management module 241 receives an input from the battery 242 and/or an input from the charging management module 240, and supplies power to the processor 210, the internal memory 221, an external memory, the display 294, the camera 293, the wireless communication module 260, and the like. The power management module 241 may be further configured to monitor parameters such as a battery capacity, a battery cycle count, and a battery health status (electric leakage or impedance). In some other embodiments, the power management module 241 may alternatively be disposed in the processor 210. In some other embodiments, the power management module 241 and the charging management module 240 may alternatively be disposed in a same device.

A wireless communication function of the electronic device may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna of the electronic device may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 250 may provide a solution that is applied to the electronic device and that includes wireless communication such as 2G/3G/4G/5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some functional modules of the mobile communication module 250 may be disposed in the processor 210. In some embodiments, at least some functional modules in the mobile communication module 250 may be disposed in a same device as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 270A, the receiver 270B, and the like), and displays an image or a video through the display 294. In some embodiments, the modem processor may be an independent device. In some other embodiments, the modem processor may be independent of the processor 210, and is disposed in a same device as the mobile communication module 250 or another functional module. The wireless communication module 260 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 260 may be one or more devices integrating at least one communication processing module. The wireless communication module 260 receives an electromagnetic wave through the antenna 2, performs frequency modulation and filtering on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the electronic device, the antenna 1 and the mobile communication module 250 are coupled, and the antenna 2 and the wireless communication module 260 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change displayed information. The display 294 is configured to display an image, a video, or the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a quantum dot light-emitting diode (quantum dot light-emitting diode, QLED), or the like. In some embodiments, the electronic device may include one or N displays 294, where N is a positive integer greater than 1.

The electronic device may implement a photographing function by using the ISP, the camera 293, the video codec, the GPU, the display 294, the application processor, or the like.

The ISP is configured to process data fed back by the camera 293. The camera 293 is configured to capture a static image or a video. The digital signal processor is configured to process a digital signal, and may process another digital signal in addition to the digital image signal. The video codec is configured to compress or decompress a digital video.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU may be used to implement an application like intelligent cognition of the electronic device, for example, image recognition, facial recognition, voice recognition, and text understanding.

The internal memory 221 may be configured to store computer-executable program code, and the executable program code includes instructions. The processor 210 executes various function applications of the electronic device and data processing by running the instructions stored in the internal memory 221. The internal memory 221 may include a program storage area and a data storage area. The program storage area may store an operating system, an application required by at least one function (for example, a voice playing function or an image playing function), and the like. The data storage area may store data (for example, audio data or a phone book) and the like created when the electronic device is used. In addition, the internal memory 221 may include a high-speed random access memory, or may include a non-volatile memory, for example, at least one magnetic disk storage device, a flash memory, or a universal flash storage (universal flash storage, UFS).

The interface 220 for external memory may be configured to connect to an external memory, for example, a micro SD card, to expand a storage capability of the electronic device. The external memory card communicates with the processor 210 through the interface 220 for external memory, to implement a data storage function. For example, files such as music and a video are stored in the external memory card.

The electronic device may implement an audio function, for example, music playing or recording, through the audio module 270, the speaker 270A, the receiver 270B, the microphone 270C, the headset jack 270D, the application processor, and the like.

The audio module 270 is configured to convert digital audio information into an analog audio signal for output, and is also configured to convert an analog audio input into a digital audio signal. The audio module 270 may be further configured to encode and decode an audio signal. In some embodiments, the audio module 270 may be disposed in the processor 210, or some functional modules in the audio module 270 may be disposed in the processor 210. The speaker 270A, also referred to as a "loudspeaker", is configured to convert an electrical audio signal into a sound signal. The receiver 270B, also referred to as an "earpiece", is configured to convert an electrical audio signal into a sound signal. The microphone 270C, also referred to as a "mike" or a "mic", is configured to convert a sound signal into an electrical signal. The headset jack 270D is configured to connect to a wired headset. The headset jack 270D may be a USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 290 includes a power button, a volume button, and the like. The button 290 may be a mechanical button, or may be a touch button. The electronic device may receive a button input, and generate a button signal input related to user setting and function control of the electronic device. The motor 291 may generate a vibration prompt. The motor 291 may be configured to provide an incoming call vibration prompt and a touch vibration feedback. The indicator 292 may be an indicator light, and may be configured to indicate a charging status and a battery level change, or may be configured to indicate a message, a missed call, a notification, and the like. The SIM card interface 295 is configured to connect to a SIM card. The SIM card may be inserted into the SIM card interface 295 or removed from the SIM card interface 295, to implement contact with and separation from the electronic device. The electronic device may support one or N SIM card interfaces, where N is a positive integer greater than 1. The SIM card interface 295 may support a nano-SIM card, a micro-SIM card, a SIM card, and the like.

The electronic device provided in this embodiment can perform the foregoing method embodiments, and implementation principles and technical effects of the electronic device are similar to those of the foregoing method embodiments. Details are not described herein.

An embodiment of this specification further provides a computer device. The computer device includes a processor and a memory, the memory is configured to store a computer program, and the processor is configured to read the computer program to implement the method in the foregoing method embodiments.

An embodiment of this specification further provides a computer-readable storage medium, storing a computer program. When the computer program is executed by a processor, the method in the foregoing method embodiments is implemented.

An embodiment of this specification further provides a computer program product. When the computer program product is run on an electronic device, the electronic device is enabled to implement the method in the foregoing method embodiments.

An embodiment of this specification further provides a chip system, including a processor. The processor is coupled to a memory, and the processor executes a computer program stored in the memory, to implement the method in the foregoing method embodiments. The chip system may be a single chip or a chip module including a plurality of chips.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedures or functions according to embodiments of this specification are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instruction may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

A person of ordinary skill in the art may understand that all or some of the procedures of the methods in embodiments may be implemented by a computer program instructing relevant hardware. The program may be stored in the computer-readable storage medium. When the program is executed, the procedures of the methods in embodiments may be included. The storage medium may include any medium that can store program code, such as a ROM or a random access memory RAM, a magnetic disk, or an optical disc.

Names or numbers of steps in this specification do not mean that the steps in the method procedure need to be performed in a time/logical sequence indicated by the names or numbers. An execution sequence of the steps named or numbered in the procedure can be changed based on a technical objective to be achieved, provided that same or similar technical effects can be achieved.

In the foregoing embodiments, descriptions of embodiments have respective focuses. For a part that is not described in detail or recorded in an embodiment, refer to related descriptions in other embodiments.

In embodiments provided in this specification, it should be understood that the disclosed apparatus/ device and method may be implemented in other manners. For example, the described apparatus/device embodiment is merely an example. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

It should be understood that in the descriptions of the specification and the appended claims of this application, the terms "comprise", "include", "have", and any other variant thereof are intended to cover a non-exclusive inclusion, and all mean "include but not limited to", unless otherwise specially emphasized in another manner. For example, processes, methods, systems, products, or devices that include a series of steps or modules are not limited to the steps or the modules that are clearly listed, and may include other steps and modules that are not clearly listed or that are essential for the processes, methods, products, or devices.

In the descriptions of this specification, "/" indicates an "or" relationship between associated objects, unless otherwise specified. For example, A/B may indicate A or B. In this specification, "and/or" describes only an association relationship between the associated objects, and indicates that three relationships may exist. For example, A and/or B may indicate the following three cases: Only A exists, both A and B exist, and only B exists, where A and B may be singular or plural.

In addition, in the descriptions of this specification, unless otherwise specified, "a plurality of" means two or more. In addition, "at least one of the following items" or a similar expression thereof means any combination of these items, including any combination of singular items or plural items. For example, at least one of a, b, or c may represent a, b, c, a and b, a and c, b and c, or a and b and c. Herein, a, b, and c may be singular or plural.

As used in the specification of this application and the appended claims, the term "if" may be interpreted as "when" or "once" or "in response to determining" or "in response to detecting" depending on the context. Similarly, the phrase "if it is determined" or "if [a described condition or event] is detected" may be interpreted, depending on the context, as a meaning of "once determined" or "in response to determining" or "once [a described condition or event] is detected" or "in response to detecting [a described condition or event]".

In addition, in the descriptions of the specification and the appended claims of this application, the terms "first", "second", and the like are intended to distinguish between similar objects but do not necessarily indicate a specific order or sequence, and shall not be understood as an indication or implication of relative importance or implicit indication of a quantity of indicated technical features. It should be understood that the data used in such a way is interchangeable in proper circumstances, so that embodiments described herein can be implemented in other orders than the order illustrated or described herein. A feature limited by "first" and "second" may explicitly or implicitly include at least one of the features.

In embodiments of this specification, the words such as "example" or "for example" indicate giving an example, an illustration, or a description. Any embodiment or design scheme described as an "example" or "for example" in embodiments of this specification should not be explained as being more preferred or having more advantages than another embodiment or design scheme. Exactly, use of the word "example", "for example", or the like is intended to present a related concept in a specific manner.

Reference to "an embodiment", "some embodiments", or the like described in the specification of this application means that specific features, structures, or characteristics described with reference to the embodiment are included in one or more embodiments of this specification. Therefore, statements such as "in an embodiment", "in some embodiments", "in some other embodiments", and "in other embodiments" that appear at different places in this specification do not necessarily refer to a same embodiment, but mean "one or more but not all embodiments", unless otherwise specifically emphasized in another manner.

Finally, it should be noted that the foregoing embodiments are merely intended for describing the technical solutions of this specification, but not for limiting this specification. Although this specification is described in detail with reference to the foregoing embodiments, a person of ordinary skill in the art should understand that modifications may still be made to the technical solutions described in the foregoing embodiments or equivalent replacements are made to some or all technical features thereof, without departing from the scope of the technical solutions of embodiments of this specification.

## Claims

1. A printing method, applied to an electronic device, wherein the electronic device comprises a host operating system and a virtual operating system that is deployed in a virtual container of the host operating system, and the method comprises:
in response to a print request operation performed on a target application, invoking a first print service to send a print task to a second print service via a virtual channel, wherein the target application is an application on the virtual operating system, the first print service is a print service on the virtual operating system, and the second print service is a print service on the host operating system; and
sending a print instruction to a target printer through the second print service based on the print task.

2. The method according to claim 1, wherein the print request operation comprises a trigger operation for a first print interface and a first print control operation performed on the first print interface, wherein the trigger operation for the first print interface is used to trigger display of the first print interface, and a printer in a printer option displayed in the first print interface is different from a printer connected to the host operating system.

3. The method according to claim 1 or 2, wherein the print task comprises print file information and a print parameter, and the print parameter does not comprise a printer identifier.

4. The method according to claim 3, wherein the print file information comprises a to-be-printed target file.

5. The method according to claim 3, wherein the print file information comprises a storage path of a to-be-printed target file.

6. The method according to claim 5, wherein sending the print instruction to the target printer through the second print service based on the print task comprises:
mounting the storage path of the to-be-printed target file to a specified directory on the host operating system;
reading the to-be-printed target file from the specified directory; and
sending the print instruction to the target printer through the second print service based on the to-be-printed target file and the print parameter.

7. The method according to any one of claims 1 to 6, wherein the virtual channel is a remote desktop protocol RDP communication channel.

8. The method according to claim 7, wherein the RDP communication channel comprises a server and a client, the server is installed on the virtual operating system, and the client is installed on the host operating system.

9. The method according to claim 8, wherein the first print service is cupsd, and invoking the first print service to send the print task to the second print service via the virtual channel comprises:
invoking a target backend in the cupsd to send the print task to the server of the RDP communication channel;
invoking the server of the RDP communication channel to send the print task to the client of the RDP communication channel; and
invoking the client of the RDP communication channel to send the print task to the second print service.

10. The method according to claims 1 to 9, wherein sending the print instruction to the target printer through the second print service based on the print task comprises:
displaying a second print interface in the host operating system based on the print task, wherein the second print interface is used by a user to select the target printer; and
in response to a second print control operation performed on the second print interface, sending the print instruction to the target printer through the second print service.

11. The method according to claim 10, wherein the second print interface comprises a preview window, and the preview window is used to display the to-be-printed target file.

12. The method according to claim 10 or 11, wherein the second print control operation is an operation of clicking a print button in the second print interface.

13. The method according to any one of claims 10 to 12, wherein the second print control operation comprises an operation of selecting the target printer in the second print interface.

14. The method according to any one of claims 10 to 13, wherein the second print control operation comprises an operation of setting a print parameter in the second print interface.

15. The method according to any one of claims 1 to 14, wherein the virtual operating system comprises at least one of a Linux operating system, a Unix operating system, and a MacOS operating system.

16. The method according to claim 15, wherein the virtual operating system is the Linux operating system, and the first print service is the printing system service cupsd.

17. The method according to any one of claims 1 to 16, wherein the host operating system comprises at least one of a Harmony operating system, a Windows operating system, and an Android operating system.

18. The method according to claim 17, wherein the host operating system is the Harmony operating system, and the second print service is Huawei Print.

19. An electronic device, comprising a memory and a processor, wherein the memory is configured to store a computer program, and the processor is configured to perform the method according to any one of claims 1 to 18 when invoking the computer program.

20. A computer-readable storage medium, storing a computer program, wherein when the computer program is executed by a processor, the method according to any one of claims 1 to 18 is implemented.

21. A computer program product, wherein when the computer program product is run on an electronic device, the electronic device is enabled to perform the method according to any one of claims 1 to 18.

22. A chip system, wherein the chip system comprises a processor, the processor is coupled to a memory, and the processor executes a computer program stored in the memory, to implement the method according to any one of claims 1 to 18.
